# FASCICULE DE BREVET EUROPEEN

(11) **EP 3 533 133 B1**
(45) Date de publication et mention de la délivrance du brevet: **02.09.2020**
(21) Numéro de dépôt: 17791055.1
(22) Date de dépôt: 25.10.2017
(51) Int. Cl.: H02K 5/173

(54) **MACHINE AVEC SYSTÈME DE BLOCAGE AXIAL DE L'ARBRE**
MASCHINE MIT EINEM SYSTEM ZUR AXIALEN VERRIEGELUNG DER WELLE
MACHINE WITH A SYSTEM FOR AXIAL BLOCKING OF THE SHAFT

(30) Priorité: 25.10.2016 FR 1660317
(43) Date de publication de la demande: 04.09.2019
(73) Titulaire: Moteurs Leroy-Somer, 16915 Angouleme Cedex 9 (FR)
(72) Inventeur: GAUTHIER, Pascal, 16290 Asnière-sur-Nouere (FR); BEYNAUD, Pascal, 16290 Saint-Saturnin (FR)
(74) Mandataire: Nony
(86) Numéro de dépôt international: PCT/EP2017/077278
(87) Numéro de publication internationale: WO 2018/077934

(56) Documents cités:
- DE-A1- 19 824 382
- JP-A- S5 953 053
- US-A- 3 147 050
- US-A- 5 001 377

## Description

La présente invention concerne les machines tournantes comportant un arbre engagé dans au moins un roulement porté par un palier, et plus particulièrement mais non exclusivement les machines tournantes électriques telles que les moteurs ou alternateurs.

Il peut être nécessaire de bloquer axialement un roulement dans le palier correspondant.

JP S59 53053 A divulgue un dispositif pour ajuster la position axiale d'un arbre rotatif après assemblage dans un moteur électrique.

US 5 001 377 A décrit un système de lubrification pour des roulements antifriction supportant un arbre rotatif dans un moteur électrique.

DE 198 24 382 A1 divulgue une unité d'engrenage à vis sans fin comportant au moins un arbre à vis sans fin déplaçable dans la direction axiale.

US 3 147 050 A décrit des moyens de montage de palier pour une machine tournante pour maintenir un palier dans son logement.

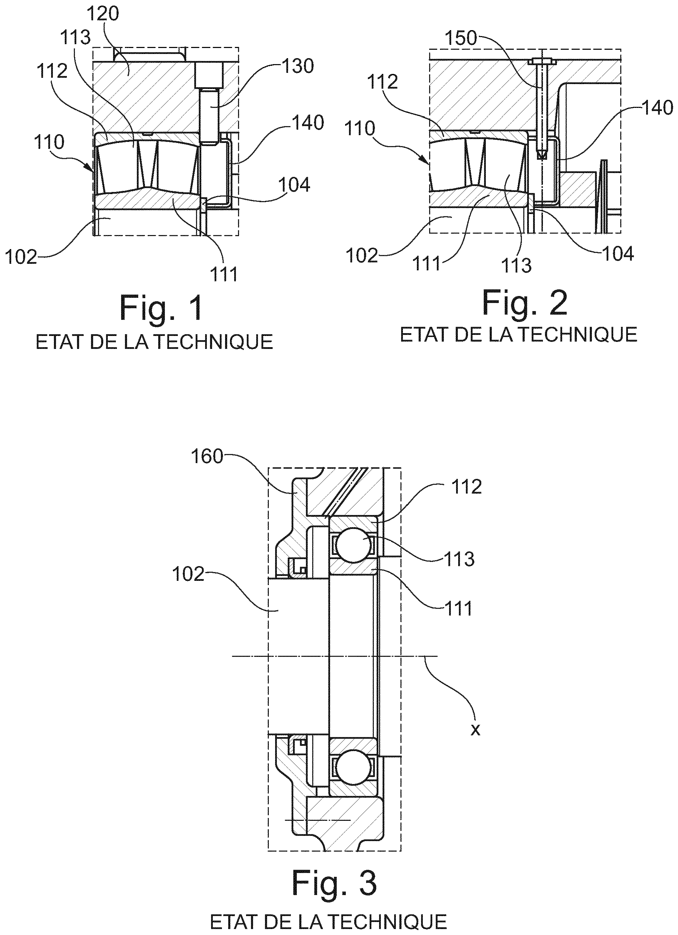

Une première façon de procéder consiste, comme illustré aux figures 1 et 2, à bloquer axialement le roulement 110 à l'aide d'un circlip 104 au niveau de la bague intérieure 111 et d'introduire une goupille élastique 130 dans un perçage du palier 120 pour bloquer axialement la bague extérieure 112.Une pièce spécifique 140 maintenue par des vis 150 est ajoutée pour protéger le roulement 110 contre la pénétration de particules extérieures et/ou pour empêcher la graisse de sortir et de polluer des zones alentours.

Une telle solution peut s'avérer difficile à mettre en œuvre sous un encombrement réduit. De plus, il est mal aisé de contrôler la poussée exercée par la goupille élastique sur la bague extérieure 112 et la force de blocage axial de celle-ci.

Une autre façon de faire, illustrée à la figure 3, consiste à fixer une pièce 160 appelée « chapeau » sur le palier 120 à l'aide de vis d'axes parallèles à l'axe de rotation de l'arbre.

Dans ce cas, la maîtrise de la pression axiale du chapeau 160 sur le roulement, combinée à la protection du roulement, est une opération qui peut s'avérer délicate, voire coûteuse.

Il existe par conséquent un besoin pour bénéficier d'une solution permettant d'assurer de façon fiable le blocage axial avec la force requise d'un roulement, et la protection de celui-ci, même sous un encombrement réduit.

L'invention atteint cet objectif grâce à une machine tournante selon la revendication 1.

Grâce à l'invention, l'élément de poussée agit par effet de coin sur le cache pousseur et la poussée exercée par le cache pousseur sur le roulement peut être plus facilement maîtrisée, tout en protégeant le roulement.

De préférence, le ou chaque élément de poussée est une vis. La poussée exercée par le cache pousseur sur le roulement peut alors être contrôlée aisément en vissant plus ou moins la vis, et en contrôlant le couple de serrage de la vis par exemple.

De préférence, le ou chaque élément de poussée est orienté perpendiculairement à l'axe de rotation de l'arbre. Cela facilite l'accès à l'élément de poussée et peut permettre d'obtenir aisément l'effet de coin recherché. Cela peut permettre également la réalisation d'une machine compacte au niveau des moyens mis en œuvre pour assurer le blocage axial de l'arbre.

Il peut être avantageux que ladite surface s'étende obliquement relativement à l'axe de rotation de l'arbre, étant de préférence conique s'évasant en rapprochement du roulement.

Dans ce cas, l'élément de poussée présente de préférence une pente à son extrémité qui est sensiblement égale à celle de ladite surface dans la zone d'appui de l'élément de poussée sur ladite surface, l'élément de poussée étant alors de préférence constitué par une vis à pointe conique.

Le cache pousseur présente sur son bord radialement extérieur un bourrelet de matière en appui contre la bague extérieure. La face de ce bourrelet venant en appui sur la bague extérieure du roulement présente de préférence une forme qui épouse celle de la face en regard de la bague extérieure.

Le nombre d'éléments de poussée est de préférence d'au moins deux, de façon à répartir l'effort de serrage sur la périphérie de la bague extérieure. Les éléments de poussée sont de préférence, dans ce cas, diamétralement opposés. De préférence encore, les éléments de poussée sont au nombre d'au moins trois, étant répartis uniformément à la périphérie de la bague extérieure.

Le cache pousseur présente sur son bord radialement intérieur un retour dirigé vers la bague radialement intérieure. Le cache pousseur s'étend de préférence avec un faible jeu à distance de l'arbre, de façon à retenir la graisse et protéger efficacement le roulement. Ce jeu est par exemple inférieur ou égal à 1mm. Il peut y avoir le cas échéant un joint d'étanchéité frottant additionnel, du type bague à lèvres ou équivalent.

La bague extérieure peut être immobilisée axialement par tout moyen du côté opposé au cache pousseur, et par exemple la bague extérieure vient axialement en appui contre un épaulement du palier du côté opposé au cache pousseur.

La machine peut comporter un deuxième cache, du côté opposé au cache pousseur, pour assurer sa protection et retenir la graisse.

Le cache pousseur peut être réalisé en tout matériau adapté, notamment en matière plastique, composite ou métal, notamment en aluminium. Le cache pousseur est de préférence conçu pour ne pas se déformer lorsqu'il est appliqué contre la bague extérieure.

La machine selon l'invention peut constituer un moteur, un alternateur ou un réducteur.

L'invention a encore pour objet un procédé d'utilisation d'une machine selon l'invention, telle que définie ci-dessus, comportant l'étape pour immobiliser axialement l'arbre, consistant à déplacer le ou les éléments de poussée relativement au palier pour amener le cache pousseur à presser la bague extérieure du roulement et à immobiliser cette dernière axialement relativement au palier.

Le ou chaque élément de poussée est de préférence vissé dans le palier pour appliquer le cache pousseur contre la bague extérieure. De préférence, le couple de serrage de la vis est contrôlé. Cela permet de maîtriser aisément l'effort de blocage axial exercé par le cache pousseur sur la bague extérieure du roulement.

D'autres caractéristiques et avantages de la présente invention ressortiront à la lecture de la description détaillée qui va suivre, d'un exemple de mise en œuvre non limitatif de celle-ci, et à l'examen du dessin annexé, sur lequel :
- les figures 1 et 2, précédemment décrites, sont des coupes axiales schématiques et partielles d'une machine selon l'art antérieur,
- la figure 3 est une vue analogue aux figures 1 et 2 d'une variante de réalisation selon l'art antérieur, et
- la figure 4 représente en coupe axiale, de façon schématique et partielle, un exemple de machine réalisée conformément à l'invention.

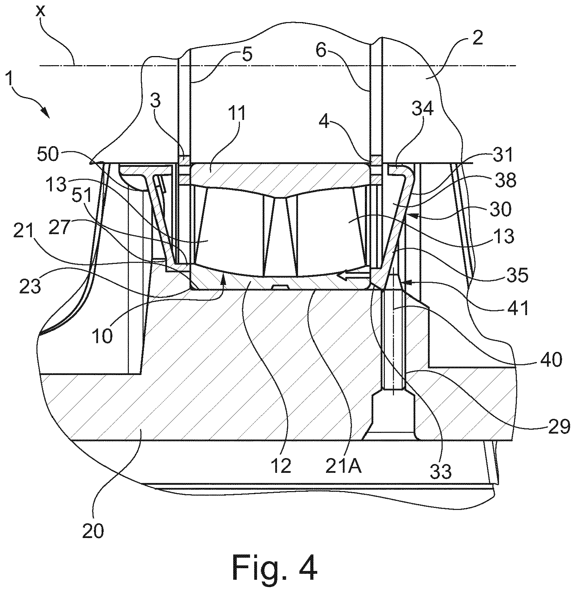

La machine 1 selon l'invention, représentée partiellement à la figure 4, comporte un arbre 2 tournant autour d'un axe de rotation X.

La machine 1 est par exemple un moteur électrique.

L'arbre 2 est engagé dans un roulement 10 comportant une bague intérieure 11, une bague extérieure 12 et des éléments de roulement 13 disposés entre les bagues 11 et 12.

Dans l'exemple considéré, les éléments de roulement 13 sont des rouleaux mais l'invention n'est pas limitée à un type de roulement particulier, et les éléments de roulement peuvent être des billes.

La bague intérieure 11 est immobilisée axialement sur l'arbre 2 par des circlips 3 et 4 fixés dans des gorges correspondantes 5 et 6 de l'arbre 2. Dans des variantes, l'immobilisation se fait autrement, grâce par exemple à un épaulement sur l'arbre.

La bague extérieure 12 est portée par un palier 20 de la machine, présentant une ouverture traversée par l'arbre.

Le palier 20 présente un logement 21 dans lequel est reçue la bague extérieure 12 du roulement 10. Le logement 21 présente un épaulement 23 contre lequel vient en appui axialement la bague extérieure 12.

Un cache pousseur 30 est disposé du côté opposé à l'épaulement 23 pour presser la bague extérieure 12 contre l'épaulement 23.

Ce cache pousseur 30 présente une paroi 31 de forme conique, convergeant en éloignement de l'épaulement 23, s'étendant sensiblement sur toute la dimension radiale de l'espace entre le fond 21a du logement 21 et l'arbre 2.

Le cache pousseur 30 présente sur son bord radialement extérieur, du côté de l'épaulement 23, un bourrelet de matière 33 et sur son bord radialement intérieur un retour 34 dirigé vers le roulement 10, s'étendant sensiblement parallèlement à l'axe X.

Le bourrelet 33 est en appui axialement contre la bague extérieure 12 du côté opposé à l'épaulement 23.

Plusieurs éléments de poussée, constitués par des vis 40, dont l'une seulement est apparente sur la figure 1, sont disposés sur le palier 20 de façon à exercer une contrainte sur le cache pousseur 30 pour le plaquer contre le roulement 10.

Les vis 40 sont vissées dans des taraudages correspondants 29 du palier 20, répartis uniformément, orientés perpendiculairement à l'axe X, et présentent chacune une pointe conique 41 de même conicité que la surface 35 de la paroi 31 opposée au roulement 10.

L'extrémité conique 41 vient en appui sur la paroi 31 du côté opposé au bourrelet 33. En vissant la vis 40, on transmet par effet de coin une poussée axiale à la bague extérieure 12.

En vissant plus ou moins la vis 40 et en contrôlant le couple de serrage, on peut ainsi maîtriser précisément la poussée axiale qu'exerce le cache pousseur 30 sur la bague extérieure 12.

Le retour 34 s'étend avec un faible jeu de l'arbre 2, de façon à retenir la graisse présente dans l'espace 38 entre le roulement 10 et le cache pousseur 30.

Du côté opposé au cache pousseur 30, la machine peut comporter un cache 50 s'étendant entre le palier 20 et l'arbre 2, avec un faible jeu avec celui-ci, comme illustré.

Le cache 50 peut comporter un retour 51 vers le roulement, de son côté radialement extérieur, qui est immobilisé axialement entre la bague extérieure 12 et un épaulement 27 du palier 20.

Bien entendu, l'invention n'est pas limitée à l'exemple illustré. Par exemple, la machine est un réducteur ou un alternateur, ou tout autre mécanisme où il existe un intérêt à bloquer axialement un arbre guidé par au moins un roulement.

Dans des variantes, le deuxième cache 50 est absent ; dans des variantes également, la machine est réalisée sans l'épaulement 23.

## Revendications

1. Machine tournante (1) comportant :
- au moins un palier (20) ;
- au moins un roulement (10) porté par le palier (20), le roulement comportant des bagues intérieure (11) et extérieure (12) et des éléments de roulement (13) entre les bagues ;
- un arbre (2) engagé dans le roulement, bloqué axialement relativement à la bague intérieure ;
- un cache pousseur (30) disposé d'un côté du roulement, présentant une surface (31) opposée au roulement;
- au moins un élément de poussée (40) déplacé transversalement à l'axe de rotation (X) de l'arbre (2) pour appliquer une contrainte sur ladite surface (31) du cache pousseur afin de le presser contre la bague extérieure (12) et bloquer cette dernière axialement, **caractérisé en ce que**
le cache pousseur (30) a sur son bord radialement extérieur un bourrelet de matière (33) en appui contre la bague extérieure (12) et sur son bord radialement intérieur un retour (34) dirigé vers la bague radialement intérieure (11), le retour (34) s'étendant avec un faible jeu de l'arbre (2), de façon à retenir la graisse présente dans l'espace (38) entre le roulement (10) et le cache pousseur (30).

2. Machine selon la revendication 1, le ou chaque élément de poussée (40) étant une vis.

3. Machine selon la revendication 1 ou 2, le ou chaque élément de poussée (40) étant orienté perpendiculairement à l'axe de rotation (X) de l'arbre.

4. Machine selon l'une quelconque des revendications précédentes, ladite surface (31) s'étendant obliquement relativement à l'axe de rotation (X) de l'arbre.

5. Machine selon l'une quelconque des revendications précédentes, ladite surface (31) étant conique s'évasant en rapprochement du roulement (10).

6. Machine selon l'une des revendications 4 et 5, l'élément de poussée (40) ayant une pente à son extrémité, sensiblement égale à celle de ladite surface (31) dans la zone d'appui de l'élément de poussée sur ladite surface, l'élément de poussée (40) étant de préférence constitué par une vis à pointe conique (41), notamment de même conicité que la surface (31).

7. Machine selon l'une quelconque des revendications précédentes, la bague extérieure (12) venant axialement en appui contre un épaulement (23) du palier (20) du côté opposé au cache pousseur (30).

8. Machine selon l'une quelconque des revendications précédentes, comportant un deuxième cache (50) du côté opposé au cache pousseur (30).

9. Machine selon l'une quelconque des revendications précédentes, le cache pousseur (30) étant réalisé en matière plastique, composite ou métal.

10. Machine (1) selon l'une quelconque des revendications précédentes, constituant un moteur, un alternateur ou un réducteur.

11. Machine selon la revendication 2, le ou chaque élément de poussée (40) étant vissé dans le palier (20) pour appliquer le cache pousseur (30) contre la bague extérieure (12).

12. Procédé d'utilisation d'une machine telle que définie dans l'une quelconque des revendications précédentes, comportant l'étape pour immobiliser axialement l'arbre (2), consistant à déplacer le ou chaque élément de poussée (40) transversalement à l'axe de rotation (X) de l'arbre (2), pour amener le cache pousseur (30) à presser la bague extérieure (12) du roulement (10) et à immobiliser cette dernière axialement relativement au palier (20).

13. Procédé selon la revendication 12, le ou chaque élément de poussée (40) étant vissé dans le palier (20) pour appliquer le cache pousseur (30) contre la bague extérieure (12).

14. Procédé selon la revendication 13, le ou chaque élément de poussée (40) étant vissé avec un couple de serrage contrôlé.

## Patentansprüche

1. Rotierende Maschine (1), die Folgendes umfasst:
- mindestens ein Lager (20);
- mindestens ein Wälzlager (10), das durch das Lager (20) gestützt wird, wobei das Wälzlager einen Innenring (11) und einen Außenring (12) und Wälzkörper (13) zwischen den Ringen umfasst;
- eine Welle (2), die mit dem Wälzlager in Eingriff ist und relativ zu dem Innenring axial verriegelt ist;
- eine drückende Abdeckung (30), die auf einer Seite des Wälzlagers angeordnet ist und eine von dem Wälzlager abgewandte Fläche (31) aufweist;
- mindestens ein Druckelement (40), das quer zur Drehachse (X) der Welle (2) verschoben wird, um eine Kraft auf die Fläche (31) der drückenden Abdeckung zu applizieren, um diese gegen den Außenring (12) zu pressen und diesen letzteren axial zu verriegeln, **dadurch gekennzeichnet, dass**
die drückende Abdeckung (30) an ihrem radial äußeren Rand einen Materialwulst (33), der an dem Außenring (12) anliegt, und an ihrem radial inneren Rand einen Umschlag (34), der zu dem radial inneren Ring (11) hin gerichtet ist, aufweist, wobei sich der Umschlag (34) mit einem geringen Spiel zur Welle (2) erstreckt, um das in dem Raum (38) zwischen dem Wälzlager (10) und der drückenden Abdeckung (30) befindliche Fett zurückzuhalten.

2. Maschine nach Anspruch 1, wobei das oder jedes Druckelement (40) eine Schraube ist.

3. Maschine nach Anspruch 1 oder 2, wobei das oder jedes Druckelement (40) senkrecht zur Drehachse (X) der Welle ausgerichtet ist.

4. Maschine nach einem der vorhergehenden Ansprüche, wobei sich die Fläche (31) relativ zur Drehachse (X) der Welle schräg erstreckt.

5. Maschine nach einem der vorhergehenden Ansprüche, wobei die Fläche (31) konisch ist und sich mit zunehmender Nähe zum Wälzlager (10) aufweitet.

6. Maschine nach einem der Ansprüche 4 und 5, wobei das Druckelement (40) an seinem Ende eine Neigung aufweist, die im Wesentlichen gleich der der Fläche (31) in dem Bereich, in dem das Druckelement an der Fläche anliegt, ist, wobei das Druckelement (40) vorzugsweise aus einer Schraube mit konischer Spitze (41) besteht, insbesondere mit der gleichen Konizität wie die Fläche (31).

7. Maschine nach einem der vorhergehenden Ansprüche, wobei der Außenring (12) auf der der drückenden Abdeckung (30) gegenüberliegenden Seite axial an einer Schulter (23) des Lagers (20) anliegt.

8. Maschine nach einem der vorhergehenden Ansprüche, die eine zweite Abdeckung (50) auf der der drückenden Abdeckung (30) gegenüberliegenden Seite umfasst.

9. Maschine nach einem der vorhergehenden Ansprüche, wobei die drückende Abdeckung (30) aus Kunststoff, Verbundwerkstoff oder Metall hergestellt ist.

10. Maschine (1) nach einem der vorhergehenden Ansprüche, die einen Motor, einen Wechselstromgenerator oder ein Getriebe bildet.

11. Maschine nach Anspruch 2, wobei das oder jedes Druckelement (40) in das Lager (20) geschraubt wird, um die drückende Abdeckung (30) gegen den Außenring (12) zu applizieren.

12. Verfahren zur Verwendung einer Maschine wie in einem der vorhergehenden Ansprüche definiert, das den Schritt zum axialen Immobilisieren der Welle (2) umfasst, der darin besteht, das oder jedes Druckelement (40) quer zur Drehachse (X) der Welle (2) zu verschieben, um zu bewirken, dass die drückende Abdeckung (30) den Außenring (12) des Wälzlagers (10) anpresst und diesen letzteren relativ zu dem Lager (20) immobilisiert.

13. Verfahren nach Anspruch 12, wobei das oder jedes Druckelement (40) in das Lager (20) geschraubt wird, um die drückende Abdeckung (30) gegen den Außenring (12) zu applizieren.

14. Verfahren nach Anspruch 13, wobei das oder jedes Druckelement (40) mit einem kontrollierten Anzugsmoment eingeschraubt wird.

## Claims

1. A rotary machine (1), including:
- at least one bearing mount (20);
- at least one bearing (10) carried by the bearing mount (20), the bearing including inner (11) and outer (12) races and rolling elements (13) between the races;
- a shaft (2) engaged in the bearing, axially blocked relative to the inner race;
- a pushrod cover (30) arranged on one side of the bearing, having a surface (31) opposite the bearing;
- at least one push element (40) moved transversally to the axis of rotation (X) of the shaft (2) in order to exert a pressure on said surface (31) of the pushrod cover in order to press it against the outer race (12) and axially block same,
**characterised in that** the pushrod cover (30) has on its radially outer edge a bead of material (33) in contact with the outer race (12) and on its radially inner edge a turnback (34) directed towards the radially inner race (11), the turnback (34) extending with a small clearance from the shaft (2) so as to retain the grease present in the space (38) between the bearing (10) and the pushrod cover (30).

2. The machine as claimed in Claim 1, the push element or each push element (40) being a screw.

3. The machine as claimed in Claim 1 or 2, the push element or each push element (40) being oriented perpendicularly to the axis of rotation (X) of the shaft.

4. The machine as claimed in any one of the preceding claims, said surface (31) extending obliquely relative to the axis of rotation (X) of the shaft.

5. The machine as claimed in any one of the preceding claims, said surface (31) being tapered, flaring towards the bearing (10).

6. The machine as claimed in either one of claims 4 and 5, the push element (40) having a slope at its end, substantially equal to that of said surface (31) in the zone of contact of the push element on said surface, the push element (40) preferably consisting of a screw with a tapered tip (41), in particular with the same taper as the surface (31).

7. The machine as claimed in any one of the preceding claims, the outer race (12) being axially in contact with a projection (23) of the bearing mount (20) on the side opposite the pushrod cover (30).

8. The machine as claimed in any one of the preceding claims, including a second cover (50), on the side opposite the pushrod cover (30).

9. The machine as claimed in any one of the preceding claims, the pushrod cover (30) being made in plastic, composite or metal material.

10. The machine (1) as claimed in any one of the preceding claims, consisting of a motor, an alternator or a reduction gear.

11. The machine as claimed in Claim 2, the push element or each push element (40) being screwed into the bearing mount (20) so as to press the pushrod cover (30) against the outer race (12).

12. A method of using a machine such as that defined in any one of the preceding claims, including the step for axially immobilizing the shaft (2) consisting of moving the push element or each push element (40) transversally to the axis of rotation (X) of the shaft (2) so as to cause the pushrod cover (30) to press the outer race (12) of the bearing (10) and to immobilize this race axially relative to the bearing mount (20).

13. The method as claimed in Claim 12, the push element or each push element (40) being screwed into the bearing mount (20) so as to press the pushrod cover (30) against the outer race (12).

14. The method as claimed in Claim 13, the push element or each push element (40) being screwed with a controlled tightening torque.
